(19) **Europäisches Patentamt**

**European Patent Office**

**Office européen des brevets**

(11) **EP 1 214 574 B1**

(12) **EUROPEAN PATENT SPECIFICATION**

(45) Date of publication and mention
of the grant of the patent:
**14.07.2004 Bulletin 2004/29**

(51) Int Cl.⁷: **G01M 11/06**, B60Q 1/08,
G01J 1/18

(21) Application number: **00953594.9**

(22) Date of filing: **28.08.2000**

(86) International application number:
**PCT/PL2000/000058**

(87) International publication number:
**WO 2001/022047 (29.03.2001 Gazette 2001/13)**

(54) **A METHOD FOR ESTIMATING THE LIGHTING QUALITY OF VEHICLE HEADLIGHTS**

VERFAHREN ZUR ABSCHÄTZUNG DER BELEUCHTUNGSQUALITÄT VON
FAHRZEUGSCHEINWERFERN

PROCEDE SERVANT A EVALUER LA QUALITE DE L'ECLAIRAGE DE PHARES DE VEHICULES

(84) Designated Contracting States:
**AT BE CH CY DE DK ES FI FR GB GR IE IT LI LU
MC NL PT SE**

(30) Priority: **23.09.1999 PL 33555399**

(43) Date of publication of application:
**19.06.2002 Bulletin 2002/25**

(73) Proprietor: **Instytut Transportu Samochodowego
03-301 Warszawa (PL)**

(72) Inventor: **TARGOSI&Nacute;SKI, Tomasz
PL-02-799 Warszawa (PL)**

(74) Representative: **Zellentin, Rüdiger, Dr.
Zellentin & Partner,
Zweibrückenstrasse 15
80331 München (DE)**

(56) References cited:
**DE-C- 4 404 158**      **US-A- 4 481 563**
**US-A- 4 495 552**      **US-A- 5 164 785**
**US-A- 5 426 500**

**Description**

A matter of the invention is a method for estimating the lighting quality of vehicle headlights particularly automobile headlights.

The invention has an application in the vehicle control stations as well as in the laboratories for testing of vehicle headlights, especially automotive headlights during the process of its designing, constructing and exploitation.

In Regulation No 20 of the United Nations Organisation - Economic Commission for Europe - E/ECE/324-E/ECE/TRANS/505/Rev. 1/Add. 19/Rev.2 -is described a method of estimation the lighting quality of car headlights. The method relies upon that the light beam emitted from the tested vehicle head lamp is projected on the screen situated perpendicularly to the optical axis of the headlamp and in the fixed distance from it. Then in the definite points and areas of that screen the illumination is measured by luxmeter and the results of these measurements are indicated in a table and compared with the required values. There is a modification of this method in which the values of the tested headlamp illumination are obtained by measuring the luminous intensity of the headlamp by goniophotometer in a solid angle of the emitted light beam.

The main disadvantage of the described methods is that the estimation of the lighting quality of the vehicle headlights is being taken only for one headlamp and that the values of illumination are obtained from the surface of a screen situated perpendicularly to the emitted light beam. However, the surface of the screen does not reflect the road surface observed by a driver The driver observes the road and its closest surrounding on a surface which is parallel to the optical axis of car headlamps Furthermore, in the described methods the lighting quality is estimated for the constant distance between the tested headlamp and measuring device, and for these conditions the requirements are defined, whereas, the illuminated points of the lighting road are in different distances depending on the setting of headlamps on the vehicle. Therefore, the described methods do not correspond to the real conditions of illuminated objects observed on a road and they do not reflect the real lighting characteristics, for one vehicle headlamp and especially for the set of headlamps installed on a vehicle In fact, the distribution of illumination of vehicle headlamps is entirely different on the road surface from the one on the screen Therefore, the measured results do not correspond to the real illumination conditions existed on the road and consequently the estimation of the lighting quality of tested headlamp is incorrect.

A method according to the invention is free of the disadvantages described above.

The matter of the invention relies on that the obtained distribution of illumination on a screen or the luminous intensity in a solid angle for each tested headlamp is first transformed, by the known geometric methods, to the real distribution of vertical illumination on the road surface, where the vertical illumination means the illumination on the plane perpendicular to the vehicle axis and then all the such obtained distributions of vertical illumination for each headlamp of the tested set are summarised giving a final distribution of vertical illumination $E_d$. In the same way, the real distribution of vertical illumination on the surface parallel to the road, lying on the eye-level of the glared drivers, is calculated and then all the such obtained illumination distributions for each headlamp of the tested set are summarised giving a final distribution of vertical illumination $E_o$ .On the basis of these results some measure values of lighting quality are calculated, which are the numerical values $M_k$ in the case of illumination of the road and the numerical values $N_l$ in the case of the eyes of glared drivers. Calculations are made for some numbers $k$ of sectors $S_k$ established for the road surface and their surrounding, and for some numbers $l$ of sectors $S_l$ established for the surface at the eye-level of the glared drivers. The obtained results are compared with the required values

The numerical values $M_k$ are calculated according to the following mathematical formula

$$M_k = \frac{\int_{S_k} E_{rd} \cdot dS_k}{a \cdot E_a S_k}$$

where $E_{rd}$ is the value of illumination used for the calculation, on the conditions that $E_{rd} = E_d$ when $E_d \geq E_{pr}$ or alternatively $E_{rd} = 0$ when $E_d < E_{pr}$, where $E_{pr}$ is the threshold illumination in which the human eye can see anything, $E_a$ is the illumination on the surface of the driver's eye, caused by the light of tested headlamps and responsible for the sight adaptation level of the dnver's eye, $a$ is a constant number which reflects proportion between the illumination on the surface of the eye and the illumination close to the road surface, $dS_k$ is a differential of the area of tested sector $k$ and, $S_k$ is the whole area of the sector $k$.

The numerical values $N_l$ are calculated according to the following mathematical formula

$$N_l = \frac{\int_{S_l} (E_{oe} \cdot \cos\alpha - E_{op}) \cdot dS_l}{E_{op}S_l}$$

where $E_{oe}$ is the value of illumination used for the calculation, on the conditions that $E_{oe} = E_o$ when $E_o \cdot \cos\alpha \geq E_{op}$ or alternatively $E_{oe} = E_{op}$ when $E_o \cdot \cos\alpha < E_{op}$, where $\alpha$ is an angle between the sight line of the driver and the light beam causing the glare, $E_{op}$ is the threshold glare illumination on the surface of the eye, $dS_l$ is a differential of the area of tested sector $l$ and, $S_l$ is the whole area of the sector $l$.

The value of parameter $E_a$ existing in the first formula is favourable to calculate from the following mathematical formula

$$E_a = \int_\omega L_d \cdot \cos\theta \cdot d\omega$$

or alternatively from the another mathematical formula

$$E_a = b \cdot \frac{\int_{S_e} E_{da} \cdot dS_e}{S_e}$$

where $L_d$ is the luminance of the road observed by a driver and caused by the tested headlamps, $\omega$ is a solid angle with its top in the driver's eye where the illuminating surface of the road exists or a part of this angle in which there is the greatest luminance of the road responsible for the sight adaptation level of the human eye, $b$ is a constant number which reflects the proportion between the illumination on the surface of the road and the illumination on the surface of the eye, $\theta$ is an angle between the line perpendicular to the surface of the driver's eye and the incident light beam, $E_{da}$ is the illumination on the surface of the road which causes the luminance responsible for sight adaptation level of the drivers eyes, $S_e$ is the area of a plane which is perpendicular to the direction of the dnver's sight line and through which the light beams reflecting from the road incident to the eyes, $dS_e$ is a differential of the area $S_e$.

It is favourable when all the values of illumination and luminance used for the calculations are replaced by proportional non-linear functions, best by the logarithmic function. It is also favourable when all the above mathematical calculations are carried out by means of computerised numerical methods.

The main advantage of a method according to the invention is that it allows to evaluate the real illumination of the road surface, both for the one tested headlamp as for the set of two or more headlamps installed on the vehicle. This method enables to estimate the actual illumination quality of the vehicle headlamps on the road and their surrounding The method uses a very important factor as a sight adaptation level of the drivers eyes to the illuminated road surface and objects. By this method one can estimate the real light quality for the set of tested vehicle headlamps

An example of the invention is showed as follow:

A set of two headlamps is tested For each headlamp from this set, by means of a goniophotometer, the illumination distribution on the screen surface situated in the distance of 25 meters is measured. The results in digital form are stored on a computer disc. Then, by means of a computer program, the results are transformed according to the known geometrical methods to the distribution of vertical illumination on the road surface, whereas the vertical illumination is defined for the plane perpendicular to the vehicle axis. The obtained values for each of the two headlamps are summarised giving the final distribution of vertical illumination $E_d$. Then, on the road surface some number of $k$ sectors are established, in this example eight; $S_1$, $S_2$, ..., $S_8$, for whose the numerical values $M_k$ are calculated according to the following mathematical formula

$$M_k = \frac{\int\limits_{S_k} E_{rd} \cdot dS_k}{a \cdot E_a S_k}$$

where the constant factor a was established as **1**, the value $E_{rd}$ was used according to the following conditions: $E_{rd} = E_d$ when $E_d \geq E_{pr}$ or alternatively $E_{rd} = 0$ when $E_d < E_{pr}$ where $E_{pr}$ as the treshold illumination, was used as $E_{pr} = (0,05 \times E_a)$, while the value $E_a$ was calculated from the following mathematical formula

$$E_a = b \cdot \frac{\int\limits_{S_e} E_{da} \cdot dS_e}{S_e}$$

where the constant factor **b** was used as 1000, the value $E_{da}$ was used as equal to the value $E_d$ and the value $S_e$, as a plane surface perpendicular to the direction of the driver's sight line, was calculated from the relation between the illuminated road surface and the angle of observation of the driver.

In the similar way from the mathematical formula

$$N_l = \frac{\int\limits_{S_l} (E_{oe} \cdot \cos\alpha - E_{op}) \cdot dS_l}{E_{op} S_l}$$

are calculated the values of estimation of a glare illumination for the two established sectors $S_9$ and $S_{10}$ of the driver's eyes , the first one on the left side for the oncoming driver and the second one on the right side for the preceding driver

All the above calculations were made by means of the computer program The final result of these calculations, were the numerical values of light estimation $M_1$, $M_2$, ... $M_8$, suiting for sectors $S_1$, $S_2$, ... $S_8$ of the illuminating road surface and the numerical values of light estimation $N_1$ , $N_2$, correspondingly to sectors $S_9$, $S_{10}$ of the glare surface The obtained results are presented in the following table:

| Sectors | Results | Requirements |
|---|---|---|
| Sectors of road surface | $M_k$ | $M_k$ |
| $S_1$ | 0.862 | >0.750 |
| $S_2$ | 0.571 | >0.500 |
| $S_3$ | 0.192 | >0.150 |
| $S_4$ | 0.027 | >0.020 |
| $S_5$ | 0.929 | >0.750 |
| $S_6$ | 0.659 | >0.500 |
| $S_7$ | 0.220 | >0.200 |
| $S_8$ | 0.046 | >0.030 |
|  |  |  |
| Sectors of glare surface | $N_l$ | $N_l$ |
| $S_9$ | 0.169 | <0.500 |
| $S_{10}$ | 0.278 | <0.800 |

Comparing the obtained results with the required values, it is possible to estimate the light quality of the two tested headlamps. In this example the tested set of headlamps meets the established requirements.

**Claims**

1. A method for estimating the lighting quality of vehicle headlights, particularly automobile headlights, where for each tested headlamp the distribution of illumination on a screen or the luminous intensity distribution in a solid angle of emitted light beam is measured and the obtained results are compared with the required values **characterised in hat** the obtained illumination or luminance distribution for each tested headlamp is first transformed, by known geometric methods, to the real distribution of vertical illumination on the road surface and then all the such obtained light distributions for all headlamps of the tested set are summarised giving a final distribution of vertical illumination $E_d$, and that in the same way the real distribution of vertical illumination on the surface parallel to the road, lying on the eye-level of the glared drivers, is calculated and then all the such obtained illumination distributions for each headlamp of the tested set are summarised giving a final distribution of vertical illumination $E_o$, and that from the such obtained results some measure values of lighting quality are calculated, which are the numerical values $M_k$ for illumination of the road and the numerical values $N_l$ for the eyes of glared drivers, wherein the said calculations are made for some numbers $k$ of sectors $S_k$ established for the road surface and their surrounding, and for some numbers $l$ of sectors $S_l$ established for the surface at the eye-level of the glared drivers.

2. A method according to claim 1 characterised that the numerical values $M_k$ are calculated from the following mathematical formula

$$M_k = \frac{\int\limits_{S_k} E_{rd} \cdot dS_k}{a \cdot E_a S_k}$$

where $E_{rd}$ is the illumination value used for the calculation, on the conditions that $E_{rd} = E_d$ when $E_d \geq E_{pr}$ or alternatively $E_{rd} = 0$ when $E_d < E_{pr}$ where $E_{pr}$ is the threshold illumination in which the human eye can see anything, $E_a$ is the illumination on the surface of the driver's eye caused by the light of the tested headlamps and responsible for the sight adaptation level of driver's eye, $a$ is a constant number, reflecting the proportion between the illumination on the surface of the eye and illumination close to the road surface, $dS_k$ is a differential of the area of tested sector $k$ and, $S_k$ is the whole area of the sector $k$, while the numerical values $N_l$ are calculated according to the following mathematical formula

$$N_l = \frac{\int\limits_{S_l} (E_{oe} \cdot \cos\alpha - E_{op}) \cdot dS_l}{E_{op} S_l}$$

where $E_{oe}$ is the value of illumination used for the calculation, on the conditions that $E_{oe} = E_o$ when $E_o \cdot \cos\alpha \geq E_{op}$ or alternatively $E_{oe} = E_{op}$ when $E_o \cdot \cos\alpha < E_{op}$ where $\alpha$ is an angle between the sight line of the driver and the light beam causing the glare, $E_{op}$ is the threshold glare illumination on the surface of the eye, $dS_l$ is a differential of the area of tested sector $l$ and, $S_l$ is the whole area of the sector $l$.

3. A method according to claim 2 characterised that the value of parameter $E_a$ is calculated from the following mathematical formula

$$E_a = \int\limits_{\omega} L_d \cdot \cos\theta \cdot d\omega$$

or alternatively from the another mathematical formula

$$E_a = b \cdot \frac{\int_{S_e} E_{da} \cdot dS_e}{S_e}$$

wherein $L_d$ is the luminance of the road observed by the driver and caused by the tested headlamps, ω is a solid angle with its top in the driver's eye where the illuminating surface of the road exists or a part of this angle in which there is the greatest luminance of the road responsible for the sight adaptation level of the human eye, $b$ is a constant number which reflects the proportion between the illumination on the surface of the road and the illumination on the surface of the eye, θ is an angle between the line perpendicular to the surface of the driver's eye and the incident light beam, $E_{da}$ is the illumination on the surface of the road which causes the luminance responsible for the sight adaptation level of the driver's eyes, $S_e$ is the area of a plane which is perpendicular to the direction of the driver's sight line and through which the light beams reflected from the road surface incident to the eyes and, $dS_e$ is a differential of the area $S_e$.

4. A method according to claim 3 characterised that all the values of illumination and luminance used for the calculations are replaced by proportional non-linear functions

5. A method according to claim 4 characterised that one of the non-linear functions is the logarithmic function.

6. A method according to claim 5 characterised that all the above mathematical calculations are made by means of computerised numerical methods.

**Patentansprüche**

1. Verfahren zur Schätzung der Beleuchtungsqualität von Fahrzeugscheinwerfem, insbesondere Automobilscheinwerfem, wobei für jeden geprüften Scheinwerfer die Beleuchtungsverteilung auf einer Leinwand oder die Lichtstärkeverteilung in einem Raumwinkel des abgegebenen Lichtstrahls gemessen wird und die erhaltenen Ergebnisse mit Sollwerten verglichen werden, **dadurch gekennzeichnet, daß** die erhaltene Beleuchtungs- oder Lichtstärkeverteilung für jeden geprüften Scheinwerfer zunächst durch bekannte geometrische Verfahren in die echte Verteilung vertikaler Beleuchtung auf der Straßenoberfläche umgewandelt wird und anschließend sämtliche so erhaltenen Lichtverteilungen für sämtliche Scheinwerfer der geprüften Anordnung summiert werden, womit eine endgültige Verteilung vertikaler Beleuchtung $E_d$ erhalten wird, und dadurch, daß in der gleichen Weise die echte Verteilung der vertikalen Beleuchtung auf der zur Straße parallelen, auf Augenhöhe der geblendeten Fahrer liegenden Fläche berechnet wird und anschließend die so erhaltenen Beleuchtungsverteilungen für jeden Scheinwerfer der geprüften Anordnung summiert werden, was eine endgültige Verteilung vertikaler Beleuchtung $E_o$ ergibt, und dadurch, daß aus den so erhaltenen Ergebnissen einige Meßwerte der Beleuchtungsqualität berechnet werden, welche die numerischen Werte $M_k$ für die Beleuchtung der Straße und die numerischen Werte $N_l$ für die Augen geblendeter Fahrer sind, wobei die genannten Berechnungen für einige Zahlen $k$ von Sektoren $S_k$, welche für die Straßenoberfläche und ihre Umgebung festgelegt werden, und für einige Zahlen $l$ für Sektoren $S_l$, welche für die Oberfläche auf der Augenhöhe der geblendeten Fahrer festgelegt werden, durchgeführt werden.

2. Verfahren nach Anspruch 1, **dadurch gekennzeichnet, daß** die numerischen Werte $M_k$ aufgrund der folgenden mathematischen Formel berechnet werden:

$$M_k = \frac{\int_{S_k} E_{rd} \cdot dS_k}{a \cdot E_a S_k}$$

worin $E_{rd}$ der für die Berechnung verwendete Beleuchtungswert unter den Bedingungen ist, daß $E_{rd} = E_d$, wenn $E_d \geq E_{pr}$ oder alternativ $E_{rd} = 0$, wenn $E_d < E_{pr}$, wobei $E_{pr}$ der Schwellenwert der Beleuchtung, bei der das menschliche Auge irgend etwas sehen kann, $E_a$ die Beleuchtung der Oberfläche des Fahrerauges, welche durch das Licht der geprüften Scheinwerfer verursacht wird und für den Sichtadaptionswert des Auges des Fahrers ursächlich ist, $\alpha$ eine konstante Zahl, welche für das Verhältnis zwischen der Beleuchtung auf der Oberfläche des Auges und der Beleuchtung in der Nähe der Straßenoberfläche charakteristisch ist, $dS_k$ ein Differential der Fläche des getesteten Sektors $k$ und $S_k$ die gesamte Fläche des Sektors $k$ ist, während die numerischen Werte $N_l$ nach der folgenden mathematischen Formel berechnet werden:

$$N_1 = \frac{\int_{S_l} (E_{oe} \cdot \cos\alpha - E_{op}) \cdot dS_l}{E_{op} S_l}$$

worin $E_{oe}$ der für die Berechnung verwendete Beleuchtungswert unter den Bedingungen ist, daß $E_{oe} = E_o$, wenn $E_o \cdot \cos\alpha \geq E_{op}$ oder alternativ $E_{oe} = E_{op}$, wenn $E_o \cdot \cos\alpha < E_{op}$, wobei $\alpha$ ein Winkel zwischen der Sichtlinie des Fahrers und dem die Blendung verursachenden Lichtstrahl, $E_{op}$ der Schwellenwert der Blendungsbeleuchtung auf der Oberfläche des Auges, $dS_l$ ein Differential der Fläche des getesteten Sektors $l$ und $S_l$ die gesamte Fläche des Sektors $l$ ist.

3. Verfahren nach Anspruch 2, **dadurch gekennzeichnet, daß** der Wert des Parameters $E_a$ aufgrund der folgenden mathematischen Formel:

$$E_a = \int_w L_d \cdot \cos\theta \cdot d\varpi$$

oder alternativ auf der Grundlage einer anderen mathematischen Formel:

$$E_a = b \cdot \frac{\int_{S_e} E_{da} \cdot dS_e}{S_e}$$

berechnet wird,
worin $L_d$ die vom Fahrer beobachtete und von den geprüften Scheinwerfern verursachte Beleuchtungsstärke der Straße, $\omega$ ein Raumwinkel, dessen Spitze im Fahrerauge liegt, soweit die beleuchtende Oberfläche der Straße vorhanden ist, oder ein Teil dieses Winkels, in dem die größte, für den Sichtadaptionswert des menschlichen Auges ursächliche Beleuchtungsstärke der Straße befindlich ist, $b$ eine konstante Zahl, welche für das Verhältnis zwischen der Beleuchtung auf der Straßenoberfläche und der Beleuchtung der Oberfläche des Auges charakteristisch ist, $\theta$ ein Winkel zwischen der zur Oberfläche des Fahrerauges senkrechten Linie und dem auftreffenden Lichtstrahl, $E_{da}$ die Beleuchtung auf der Straßenoberfläche, welche die für den Sichtadaptionswert des Fahrerauges ursächliche Beleuchtung verursacht, $S_e$ die Fläche einer Ebene, die zur Richtung der Sichtlinie des Fahrers senkrecht ist und durch die von der Straßenoberfläche reflektierten Lichtstrahlen auf die Augen auftreffen, und $dS_e$ ein Differential der Fläche $S_e$ ist.

4. Verfahren nach Anspruch 3, **dadurch gekennzeichnet, daß** sämtliche Werte der Beleuchtung und Beleuchtungsdichte, welche für die Berechnungen herangezogen werden, durch proportionale nichtlineare Funktionen ersetzt werden.

5. Verfahren nach Anspruch 4, **dadurch gekennzeichnet, daß** eine der nichtlinearen Funktionen die logarithmische Funktion ist.

**6.** Verfahren nach Anspruch 5, **dadurch gekennzeichnet, daß** sämtliche obigen mathematischen Berechnungen mittels computerisierter numerischer Verfahren durchgeführt werden.

**Revendications**

**1.** Procédé pour estimer la qualité d'éclairage de feux avant de véhicule, en particulier de feux avant d'automobile, dans lequel, pour chaque lampe de feu avant testée, la distribution d'éclairage sur un écran ou la distribution d'intensité lumineuse dans un angle solide d'un faisceau lumineux émis est mesurée et les résultats obtenus sont comparés aux valeurs requises, **caractérisé en ce que** la distribution d'éclairage ou la distribution de luminance obtenue pour chaque lampe de feu avant testée est tout d'abord transformé au moyen de procédés géométriques connus selon la distribution réelle d'un éclairage vertical sur la surface de route puis toutes ces distributions de lumière obtenues pour toutes les lampes de feu avant du jeu testé sont résumées en obtenant une distribution finale d'éclairage vertical $E_d$ et **en ce que**, de la même façon, la distribution réelle d'éclairage vertical sur la surface parallèle à la route s'étendant au niveau des yeux des conducteurs éblouis est calculée puis toutes ces distributions d'éclairage obtenues pour chaque lampe de feu avant du jeu testé sont résumées en obtenant une distribution finale d'éclairage vertical $E_o$ et **en ce que**, à partir de ces résultats obtenus, certaines valeurs de mesure de qualité d'éclairage sont calculées, lesquelles sont les valeurs numériques $M_k$ pour l'éclairage de la route et les valeurs numériques $N_l$ pour les yeux des conducteurs éblouis où lesdits calculs sont réalisés pour certains nombres k de secteurs $S_k$ comme établi pour la surface de route et leur voisinage et pour certains nombres l de secteurs $S_l$ comme établi pour la surface au niveau des yeux des conducteurs éblouis.

**2.** Procédé selon la revendication 1, **caractérisé en ce que** les valeurs numériques $M_k$ sont calculées à partir de la formule mathématique qui suit:

$$M_k = \frac{\int_{S_k} \overline{E_{rd}} . \overline{dS_k}}{a . E_a S_k}$$

où $E_{rd}$ est la valeur d'éclairage qui est utilisée pour le calcul moyennant les conditions consistant **en ce que** $E_{rd}$ = $E_d$ lorsque $E_d \geq E_{pr}$ ou, à titre d'alternative, $E_{rd}$ = 0 lorsque $E_d < E_{pr}$ où $E_{pr}$ est l'éclairage de seuil selon lequel l'oeil humain peut voir quelque chose, $E_a$ est l'éclairage sur la surface de l'oeil du conducteur comme généré par la lumière des lampes de feu avant testées et est responsable du niveau d'adaptation de vision de l'oeil du conducteur, a est un nombre constant qui reflète la proportion entre l'éclairage sur la surface de l'oeil et l'éclairage à proximité de la surface de la route, $dS_k$ est une différentielle de l'aire du secteur testé k et $S_k$ est l'aire totale du secteur k, tandis que les valeurs numériques $N_l$ sont calculées conformément à la formule mathématique qui suit

$$N_l = \frac{\int_{S_l} (E_{oe} . \cos\alpha - E_{op}) . dS_l}{E_{op} S_l}$$

où $E_{oe}$ est la valeur d'éclairage utilisée pour le calcul moyennant les conditions consistant **en ce que** $E_{oe}$ = $E_o$ lorsque $E_o . \cos\alpha \geq E_{op}$ ou, à titre d'alternative, $E_{oe}$ = $E_{op}$ lorsque $E_o . \cos\alpha < E_{op}$ où $\alpha$ est un angle entre la ligne de vision du conducteur et le faisceau lumineux générant l'éblouissement, $E_{op}$ est l'éclairage d'éblouissement de seuil sur la surface de l'oeil, $dS_l$ est une différentielle de l'aire du secteur testé l et $S_l$ est l'aire totale du secteur l.

**3.** Procédé selon la revendication 2, **caractérisé en ce que** la valeur du paramètre $E_a$ est calculée à partir de la formule mathématique qui suit:

$$E_a = \int_{\omega} L_d . \cos\theta . d\omega$$

ou, à titre d'alternative, à partir de l'autre formule mathématique

$$E_a = b \bullet \frac{\int_{S_e} E_{da} . dS_e}{S_e}$$

où $L_d$ est la luminance de la route observée par le conducteur et générée par les lampes de feu avant testées, $\omega$ est un angle solide dont le sommet est dans l'oeil du conducteur où la surface d'éclairage de la route existe ou une partie de cet angle dans laquelle il y a la luminance la plus élevée de la route responsable du niveau d'adaptation de vision de l'oeil humain, b est un nombre constant qui reflète la proportion entre l'éclairage sur la surface de la route et l'éclairage sur la surface de l'oeil, $\theta$ est un angle entre la ligne perpendiculaire à la surface de l'oeil du conducteur et le faisceau lumineux incident, $E_{da}$ est l'éclairage sur la surface de la route qui génère la luminance responsable du niveau d'adaptation de vision des yeux du conducteur, $S_e$ est l'aire d'un plan qui est perpendiculaire à la direction de la ligne de vision du conducteur et au travers duquel les faisceaux lumineux réfléchis depuis la surface de route arrivent en incidence sur les yeux et $dS_e$ est une différentielle de l'aire $S_e$.

4. Procédé selon la revendication 3, **caractérisé en ce que** toutes les valeurs d'éclairage et de luminance utilisées pour les calculs sont remplacées par des fonctions non linéaires proportionnelles.

5. Procédé selon la revendication 4, **caractérisé en ce que** l'une des fonctions non linéaires est la fonction logarithmique.

6. Procédé selon la revendication 5, **caractérisé en ce que** tous les calculs mathématiques mentionnés sont réalisés au moyen de procédés numériques par ordinateur.